# DEMANDE DE BREVET EUROPEEN

(11) **EP 0 827 870 A1**
(43) Date de publication de la demande: **11.03.1998**
(21) Numéro de dépôt: 97402026.5
(22) Date de dépôt: 29.08.1997
(51) Int. Cl.: B60R 13/04, B60R 9/058

(54) **Enjoliveur de recouvrement pour gouttière de pavillon de véhicule et dispositif de fixation d'un pied de galerie porte-bagages dans une gouttière recouverte par cet enjoliveur**

(30) Priorité: 05.09.1996 FR 9610846
(71) Demandeur: AUTOMOBILES PEUGEOT, 75116 Paris (FR); AUTOMOBILES CITROEN, 92200 Neuilly-sur-Seine (FR)
(72) Inventeur: Veron-Delor, Laurent, 92250 La Garenne Colombes (FR)
(74) Mandataire: Berger, Helmut

(57) **Abrégé**

La présente invention concerne un enjoliveur de recouvrement pour gouttière de pavillon de véhicule.

L'enjoliveur (E) comporte une trappe basculante (1) obturant une ouverture (7) permettant le passage d'un pied de galerie (6) pour sa fixation dans la gouttière (2), la trappe étant munie d'un axe de basculement transversal (10) partageant ladite trappe en deux côtés à basculement en sens opposés permettant de découvrir en position basculée relevée de la trappe sur un côté de celle-ci le moyen de fixation (4) du pied de galerie dans la gouttière, et d'un moyen de butée (14) contre l'enjoliveur en position fermée prévu sur un côté seulement de la trappe pour permettre le basculement de celle-ci dans un seul sens.

L'invention s'applique notamment à l'industrie automobile.

## Description

La présente invention concerne un enjoliveur de recouvrement pour gouttière longitudinale de pavillon de véhicule notamment automobile, équipé de trappes basculantes obturant des ouvertures permettant le passage des pieds de galerie porte-bagages pour leur fixation dans la gouttière, et un dispositif de fixation d'un pied de galerie porte-bagages dans une gouttière recouverte par cet enjoliveur.

On connaît déjà un profilé enjoliveur obturant une rainure longitudinale formée dans la zone de raccordement du toit avec un panneau latéral de carrosserie de véhicule, ce profilé étant localement interrompu par des obturateurs basculant autour d'un axe longitudinal latéral permettant de découvrir le fond de la rainure pour la fixation d'un pied de galerie porte-bagages sur un bord relevé d'accrochage formé le long de la ligne d'assemblage du panneau de toit avec le panneau latéral adjacent.

Toutefois, ce profilé et le mode de fixation de la galerie sont destinés à une gouttière comportant un bord relevé d'accrochage et non à une gouttière munie d'une romaine.

On connaît également un autre enjoliveur comportant une trappe basculant autour d'un axe longitudinal latéral permettant de découvrir une gouttière munie d'une romaine et un moyen élastique pour maintenir respectivement la trappe dans sa position fermée et sa position ouverte verticalement relevée.

Toutefois, ces deux types d'enjoliveurs nécessitent tous un basculement manuel de la trappe avant l'installation du pied de galerie.

La présente invention a donc pour but d'éliminer les inconvénients précités et de proposer un profilé de recouvrement pour gouttière de pavillon de véhicule, qui soit de structure simple et d'actionnement aisé.

A cet effet, l'invention a pour objet un enjoliveur de recouvrement pour gouttière longitudinale de pavillon de véhicule, équipé de trappes basculantes obturant des ouvertures permettant le passage des pieds de galerie porte-bagages pour leur fixation dans la gouttière, chaque trappe pouvant basculer entre une position fermée dans laquelle la trappe obture complètement l'ouverture et une position ouverte dans laquelle la trappe est relevée sensiblement verticalement, caractérisé en ce que la trappe est munie d'un axe de basculement transversal partageant ladite trappe en deux côtés à basculement en sens opposés permettant de découvrir en position basculée relevée de la trappe sur un côté de celle-ci le moyen de fixation du pied de galerie dans la gouttière, et d'un moyen de butée contre l'enjoliveur en position fermée prévu sur un côté seulement de la trappe pour permettre le basculement de celle-ci dans un seul sens.

Selon une autre caractéristique, la trappe est munie d'un moyen élastique de rappel en butée contre l'enjoliveur, ledit moyen étant, d'une part, maintenu fixe par rapport à l'enjoliveur et, d'autre part, associé à l'un des deux côtés de la trappe. Dans ce cas, le moyen élastique de rappel peut être un ressort monté coaxialement sur l'axe de basculement de la trappe et dont les extrémités sont maintenues fixes par rapport à l'enjoliveur avec une branche intermédiaire du ressort qui appuie sous le côté de la trappe qui bascule vers le bas en position ouverte.

Selon encore une autre caractéristique, le côté de la trappe qui bascule vers le haut en position ouverte est celui qui découvre le moyen de fixation du pied de galerie.

L'axe de basculement transversal de la trappe peut être situé sensiblement au centre de celle-ci.

L'invention vise également un dispositif de fixation d'un pied de galerie porte-bagages dans une gouttière recouverte par l'enjoliveur précité, caractérisé en ce que le pied de galerie comporte un moyen-poussoir destiné à venir en appui sur le côté de la trappe qui bascule vers le bas et à s'enfoncer à travers l'ouverture correspondante pour maintenir ladite trappe en position ouverte.

Selon un mode de réalisation particulier, le moyen-poussoir est un ergot sensiblement vertical qui est destiné à prendre appui sur le fond de la gouttière, pour transmettre l'effort de la charge sur la galerie à la caisse du véhicule, la vis de fixation du pied de galerie étant longitudinalement espacée de l'ergot pour traverser l'ouverture de l'enjoliveur à la verticale du moyen de fixation dans la gouttière, de l'autre côté de la trappe.

Selon une autre caractéristique, chaque pied de galerie repose à l'extérieur de la gouttière sur le pavillon du véhicule par l'intermédiaire d'un patin en matériau déformable pour absorber les mouvements longitudinaux et latéraux de la galerie dus aux mouvements du véhicule.

L'invention sera mieux comprise, et d'autres buts, détails, avantages et caractéristiques de celle-ci apparaîtront plus clairement au cours de la description explicative qui va suivre d'un mode de réalisation particulier actuellement préféré de l'invention, donné uniquement à titre illustratif et non limitatif, en référence aux dessins schématiques annexés, dans lesquels :

La figure 1 est une vue schématique partielle et en perspective d'un véhicule comportant deux enjoliveurs de recouvrement emboîtés dans les gouttières du pavillon.

La figure 2 est une vue partielle éclatée et en perspective de l'enjoliveur de l'invention.

La figure 3 est une vue de dessus de la trappe en position ouverte dans la galerie, la peau externe de l'enjoliveur étant omise.

Les figures 4 à 6 sont des vues en coupe longitudinale verticale de l'enjoliveur de l'invention associé à un pied de galerie, respectivement en position fermée, en position ouverte et en position assemblée.

Les figures 7 et 8 sont des vues en coupe respectivement suivant les lignes VII-VII et VIII-VIII de l'enjoliveur de la figure 4.

La figure 9 est une vue en coupe suivant la ligne IX-IX de l'enjoliveur de la figure 3.

La figure 10 est une vue en coupe suivant la ligne X-X de l'ensemble enjoliveur-pied de galerie de la figure 5.

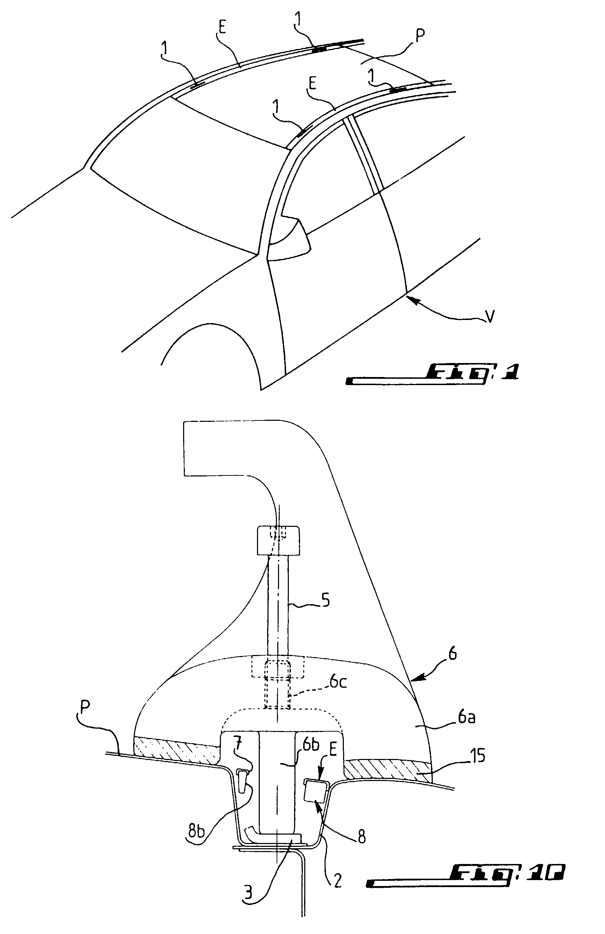

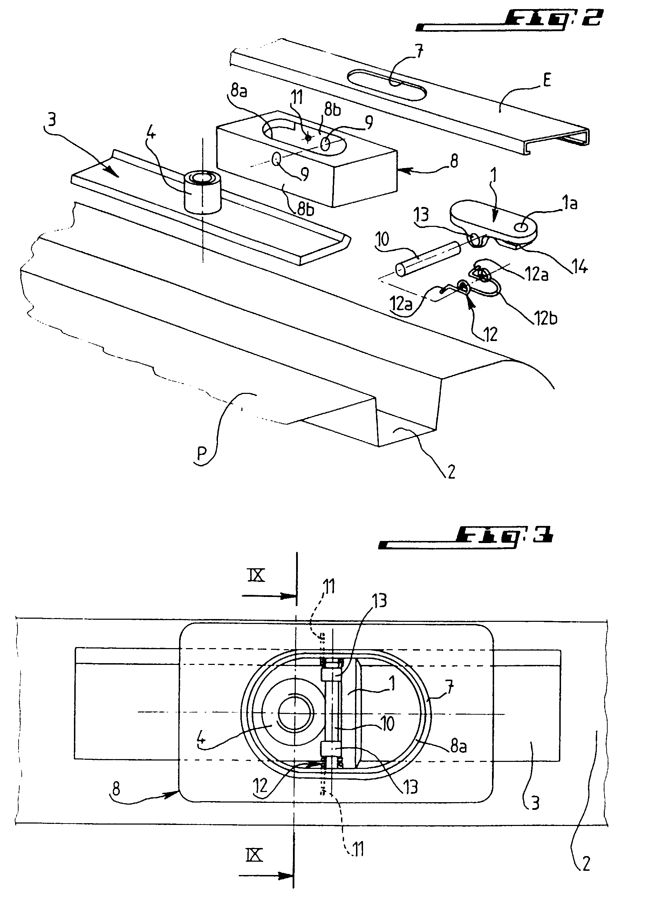

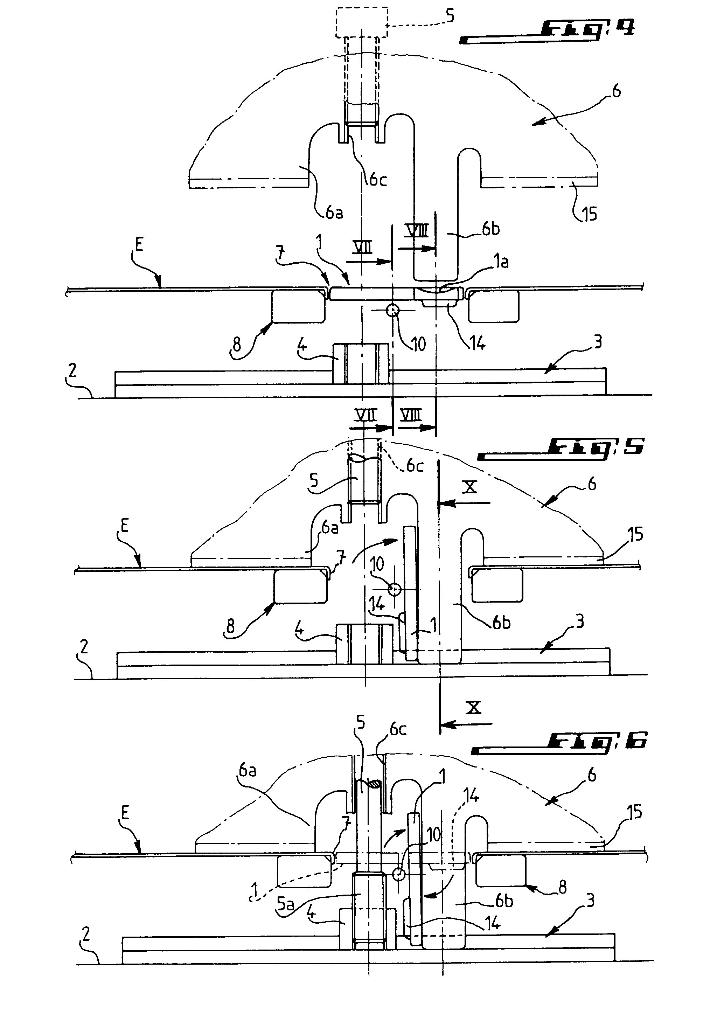

Suivant l'exemple de réalisation représenté sur les dessins, on voit sur la figure 1, un véhicule V comportant deux enjoliveurs longitudinaux latéraux E fixés sur le pavillon P de celui-ci. Chaque enjoliveur E comporte ici deux trappes basculantes 1.

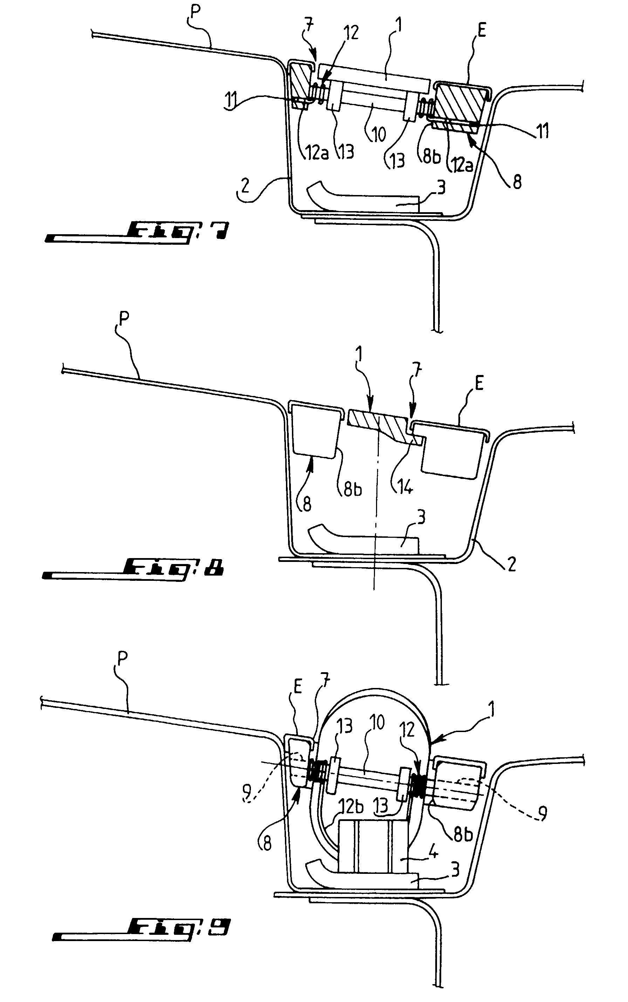

L'enjoliveur E comme représenté sur la figure 2, est destiné à s'emboîter dans une gouttière longitudinale correspondante 2 en forme de U en section transversale qui est formée dans le toit P du véhicule.

Dans la gorge de la gouttière 2 est fixée, par exemple par soudage, une romaine 3 constituée d'une plaque dont fait verticalement saillie un canon intérieurement fileté 4 dans lequel vient se visser une vis de fixation 5 pour fixer un pied de galerie 6 dans la gouttière (voir figure 4). La romaine 3 ne sera pas décrite plus en détail car elle est connue en soi.

De la même manière, l'enjoliveur E qui recouvre la gouttière 2, est fixé d'une manière connue en soi dans celle-ci, par exemple de la manière décrite dans la demande de brevet français déposée le même jour aux noms des demanderesses sous le N° 96 10 845 et incorporée à la présente demande par référence.

On voit clairement sur la figure 2 que l'enjoliveur E a la forme d'un profilé plat longitudinal comportant deux rebords inférieurs latéraux opposés d'accrochage et une ouverture oblongue 7 qui est à la verticale de chaque romaine 3 et destinée à être obturée par la trappe basculante 1 précitée.

Sous l'enjoliveur E et à l'intérieur de la gouttière 2 est logé un bâti de support 8 pour la trappe basculante 1. Ce bâti 8 comporte également une ouverture 8a qui coïncide avec celle 7 de l'enjoliveur E.

Le bâti 8 est fixé sous la paroi supérieure de l'enjoliveur E par collage, agraphage ou tout autre moyen adapté, mais il pourrait également être fixé en variante directement à la gouttière 2. Le corps du bâti 8 présente une forme sensiblement parallélépipédique creuse dont les parois latérales 8b sont perçées respectivement de trous transversalement alignés 9 qui sont destinés à recevoir l'axe de basculement transversal 10 de la trappe 1. De la même manière, les parois latérales verticales 8b comportent deux autres trous transversalement alignés 11 voisins des trous 9, pour recevoir les extrémités opposées 12a du ressort de rappel 12. Bien entendu, on pourrait prévoir le bâti 8 faisant partie intégrante de l'enjoliveur E.

Comme visible sur la figure 4, la surface externe de la trappe 1 affleure en position fermée, au même niveau que la peau externe de l'enjoliveur E. Sous sa face inférieure et environ à la moitié de sa longueur, la trappe 1 comporte deux pontets ou paliers latéraux 13 transversalement alignés et destinés à recevoir rotatif l'axe de basculement précité 10 dont les extrémités dépassent de la largeur de la trappe et s'engagent dans les trous 9 précités.

Le ressort de rappel 12 est monté coaxialement sur l'axe de basculement 10 à l'extérieur des deux paliers 13, avec ses deux extrémités opposées 12a qui s'engagent dans les trous 11 précités. Le ressort 12 comporte en outre une branche médiane 12b qui appuie sur le dessous de la trappe 1 sur un côté de celle-ci.

La trappe 1 comporte enfin sur le même côté qui est destiné à basculer vers le bas, une portion latéralement saillante 14 servant de butée contre la paroi supérieure du bâti 8 en position fermée de la trappe.

On va maintenant décrire plus en détail le pied de galerie 6 en référence aux figures 4 à 6 et 10.

Chaque pied 6 comporte une base périphérique annulaire 6a qui appuie sur la carrosserie du véhicule par l'intermédiaire d'un patin 15 en matériau déformable, par exemple élastomère, pour absorber les efforts longitudinaux et latéraux de la galerie dus aux mouvements du véhicule. Dans la zone centrale creuse de la base du pied 6, fait saillie sensiblement verticalement vers le bas un ergot-poussoir 6b dont l'extrémité inférieure est destinée à prendre appui sur la romaine 3 lorsque la trappe 1 est en position ouverte, pour transmettre l'effort de la charge à la caisse du véhicule. Comme visible sur les figures 5, 6 et 10, l'ergot-poussoir 6b traverse l'ouverture 7 de l'enjoliveur E d'un côté de la trappe basculante 1, laissant l'autre côté de celle-ci libre pour le passage de la vis de fixation 5.

Le pied 6 comporte un trou taraudé traversant 6c débouchant dans la zone centrale creuse précitée de la base, avec un décalage longitudinal par rapport à l'ergot 6b pour permettre le passage de la vis de fixation 5 de l'autre côté de la trappe 1. La vis de fixation 5 peut se déplacer entre deux positions, l'une représentée sur les figures 4 et 10, dans laquelle la vis de fixation 5 est en position haute et partiellement vissée dans le taraudage 6c, et une position illustrée sur la figure 6, dans laquelle la vis de fixation 5 est en position basse et vissée dans le canon fileté 4 de la romaine 3. Comme visible sur la figure 5, la zone centrale creuse de la base du pied 6 a une forme telle qu'elle permette le débattement de la trappe 1, en position haute de la vis, lorsque l'ergot-poussoir 6b vient en appui sur la romaine 3.

On voit sur les figures 2 et 4 un creux la sur la face externe de la trappe 1, du côté destiné à basculer vers le bas, pour indiquer et faciliter l'engagement de l'ergot-poussoir 6b avec la trappe.

On va maintenant brièvement décrire la mise en place du pied de galerie à travers l'enjoliveur et dans la gouttière en référence aux figures 4 à 6.

Pour ouvrir la trappe 1, qui se trouve dans la position fermée illustrée sur la figure 4, on positionne le pied de galerie 6 de façon que son ergot poussoir 6b se trouve à la verticale du creux la de la trappe 1. On laisse alors descendre le pied de galerie 6 sous l'effet de la gravité jusqu'à ce qu'il vienne en contact avec la trappe 1, ce qui provoque son basculement autour de l'axe 15.

Le pied de galerie 6 continue sa descente jusqu'à ce que l'extrémité inférieure de l'ergot-poussoir 6b vienne en contact avec la romaine 3, ce qui a pour effet de maintenir simultanément la trappe 1 en position ouverte verticale à l'encontre de la force de rappel du ressort. Le mouvement de basculement de la trappe 1 est indiqué par les flèches sur les figures 5 et 6. Simultanément au contact entre l'ergot-poussoir et la romaine 3, la base périphérique annulaire 6a du pied de galerie 6 prend appui sur le pavillon P par l'intermédiaire du patin déformable 15. Dans les positions illustrées sur les figures 4 et 5, la vis de fixation 5 reste en position haute dégagée de la zone centrale creuse du pied 6, pour ne pas interférer avec le débattement de la trappe 1.

L'ergot-poussoir 6b sera dimensionné et agencé de manière à s'adapter à la dimension de l'ouverture 7 du côté de la trappe qui bascule vers le bas pour que dans cette position, le taraudage 6c du pied 6 soit sensiblement verticalement aligné avec le canon fileté 4 de la romaine. Lors du basculement de la trappe 1, l'accès au canon fileté 4 est libéré, ce qui permet de visser la tige filetée dans celui-ci comme représenté sur la figure 6. On voit sur cette figure que seule la portion terminale 5a de la tige 5 est filetée de façon que cette portion terminale 5a ne soit pas simultanément vissée dans le taraudage 6c et dans le canon fileté 4.

On comprend ainsi que grâce à l'invention, le pied de galerie peut être installé dans la galerie, sans exercer aucun effort de traction manuelle sur la trappe 1, le basculement de celle-ci s'effectuant automatiquement par la poussée exercée par le pied de galerie lui-même.

Pour refermer la trappe 1, il suffit d'effectuer les opérations précédentes en sens inverse. En bref, on dévisse la tige filetée 5 pour la libérer du canon fileté 4 jusqu'à sa position haute précitée. Puis, le pied de galerie est simplement soulevé hors de la gouttière 2, ce qui provoque le rappel automatique de la trappe 1 en position fermée en butée contre l'enjoliveur E sous l'action du ressort de rappel qui avait été comprimée.

Bien que l'invention ait été décrite en liaison avec un mode de réalisation particulier, il est bien évident qu'elle n'y est nullement limité et qu'elle comprend tous les équivalents techniques des moyens décrits ainsi que leurs combinaisons si celles-ci entrent dans le cadre de l'invention.

## Revendications

1. Enjoliveur de recouvrement (E) pour gouttière longitudinale (2) de pavillon (P) de véhicule, équipé de trappes basculantes (1) obturant des ouvertures (7) permettant le passage des pieds de galerie porte-bagages (6) pour leur fixation dans la gouttière, chaque trappe pouvant basculer entre une position fermée dans laquelle la trappe obture complètement l'ouverture et une position ouverte dans laquelle la trappe est relevée sensiblement verticalement, caractérisé en ce que la trappe (1) est munie d'un axe de basculement transversal (10) partageant ladite trappe en deux côtés à basculement en sens opposés permettant de découvrir en position basculée relevée de la trappe sur un côté de celle-ci le moyen de fixation (4) du pied de galerie dans la gouttière, et d'un moyen de butée (14) contre l'enjoliveur en position fermée prévu sur un côté seulement de la trappe pour permettre le basculement de celle-ci dans un seul sens.

2. Enjoliveur selon la revendication 1, caractérisé en ce que la trappe est munie d'un moyen élastique (12) de rappel en butée contre l'enjoliveur, ledit moyen étant, d'une part, maintenu fixe par rapport à l'enjoliveur et, d'autre part, associé à l'un (1a) des deux côtés de la trappe.

3. Enjoliveur selon la revendication 2, caractérisé en ce que le moyen élastique de rappel est un ressort (12) monté coaxialement sur l'axe de basculement (10) de la trappe (1) et dont les extrémités (12a) sont maintenus fixes par rapport à l'enjoliveur (8) avec une branche intermédiaire (12b) du ressort qui appuie sous le côté (1a) de la trappe qui bascule vers le bas en position ouverte.

4. Enjoliveur selon l'une des revendications précédentes, caractérisé en ce que le côté de la trappe qui bascule vers le haut en position ouverte est celui qui découvre le moyen de fixation (4) du pied de galerie.

5. Enjoliveur selon l'une des revendications précédentes, caractérisé en ce que l'axe de basculement transversal (10) de la trappe (1) est situé sensiblement au centre de celle-ci.

6. Dispositif de fixation d'un pied de galerie porte-bagages (6) dans une gouttière (2) recouverte par l'enjoliveur selon l'une des revendications précédentes, caractérisé en ce que le pied de galerie (6) comporte un moyen-poussoir (6b) destiné à venir en appui sur le côté (1a) de la trappe qui bascule vers le bas et à s'enfoncer à travers l'ouverture (7) correspondante pour maintenir ladite trappe en position ouverte.

7. Dispositif selon la revendication 6, caractérisé en ce que le moyen poussoir est un ergot sensiblement vertical (6b) qui est destiné à prendre appui sur le fond de la gouttière (2), la vis de fixation (5) du pied de galerie (6) étant longitudinalement espacée de l'ergot pour traverser l'ouverture (7) de l'enjoliveur (E) à la verticale du moyen de fixation (4) dans la gouttière, de l'autre côté de la trappe.

8. Dispositif selon la revendication 6 ou 7, caractérisé en ce que chaque pied de galerie (6) repose à l'extérieur de la gouttière (2) sur le pavillon (P) du véhicule par l'intermédiaire d'un patin (15) en matériau déformable.
